(19) Europäisches Patentamt
European Patent Office
Office européen des brevets

(11) **EP 4 067 069 A1**

(12) **EUROPEAN PATENT APPLICATION**

(43) Date of publication:
**05.10.2022 Bulletin 2022/40**

(21) Application number: **22165382.7**

(22) Date of filing: **30.03.2022**

(51) International Patent Classification (IPC):
**B32B 7/12** *(2006.01)*      **B32B 17/04** *(2006.01)*
**B32B 17/10** *(2006.01)*

(52) Cooperative Patent Classification (CPC):
**B32B 7/12; B32B 1/00; B32B 3/266; B32B 17/04;
B32B 17/10; B32B 27/18; B32B 27/302;
B32B 27/365;** B32B 2250/02; B32B 2262/101;
B32B 2262/106; B32B 2270/00; B32B 2307/308;
B32B 2307/54; B32B 2307/542;      (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021   US 202163168450 P**

(71) Applicant: **Corning Incorporated
Corning, New York 14831 (US)**

(72) Inventors:
• **Gibson III, Ray Gage
Bath, 14810 (US)**
• **Layouni, Khaled
77300 Fontainebleau (FR)**

(74) Representative: **Epping - Hermann - Fischer
Patentanwaltsgesellschaft mbH
Schloßschmidstraße 5
80639 München (DE)**

(54) **GLASS ARTICLE HAVING A PLASTIC FRAME WITH ENHANCED RELIABILITY AGAINST DELAMINATION**

(57)    Embodiments of the disclosure relate to a glass article. The glass article includes a glass sheet having a first major surface and a second major surface. The second major surface is opposite to the first major surface. The glass article also includes a frame made of a plastic material. The plastic material has a coefficient of thermal expansion ($\alpha$) having units of ppm/°C. The glass article further includes an adhesive bonding the second major surface of the glass sheet to the frame. The adhesive has a shear modulus (G) having units of MPa. The plastic material of the frame and the adhesive are selected such that $G \leq 500,000\alpha^{-3}$.

FIG. 3

EP 4 067 069 A1

(52) Cooperative Patent Classification (CPC): (Cont.)
    B32B 2307/732; B32B 2605/003

**Description**

**CROSS REFERENCE TO RELATED APPLICATIONS**

This application claims the benefit of priority under 35 U.S.C. § 119 of U.S. Provisional Application No. 63/168,450, filed March 31, 2021, the content of which is incorporated herein by reference in its entirety.

**BACKGROUND**

The disclosure relates to a glass article having a plastic frame and, more particularly, to a glass article in which an adhesive layer and a plastic frame are selected to provide a same level of mechanical reliability as an equivalent metal frame.

Vehicle interiors include decorative surfaces and can incorporate displays in such surfaces. The materials used to form display surfaces are typically limited to polymers, which do not exhibit the durability and optical performance of glass. As such, glass sheets are desirable, especially when used as covers for displays. Existing methods of forming such glass articles involve bonding a glass sheet to a metal frame, which provides enhanced mechanical reliability. However, such metal frames are more costly in terms of material price and fabrication. Further, metal frames are heavier than other non-metal materials, such as plastics.

**SUMMARY**

According to an aspect, embodiments of the disclosure relate to a glass article. The glass article includes a glass sheet having a first major surface and a second major surface. The second major surface is opposite to the first major surface. The glass article also includes a frame made of a plastic material. The plastic material has a coefficient of thermal expansion (a) having units of ppm/°C. The glass article further includes an adhesive bonding the second major surface of the glass sheet to the frame. The adhesive has a shear modulus (G) having units of MPa. In one or more embodiments, the plastic material of the frame and the adhesive are selected such that $G \leq A\alpha^3$, and wherein A has units of (MPa)(ppm/°C)$^{+3}$ and is equal to 500,000.

According to another aspect, embodiments of the disclosure relate to a method of preparing a glass article. In the method, a glass sheet is adhered to a frame using an adhesive. The glass sheet has a first major surface and a second major surface opposite to the first major surface. The frame is made of a plastic material having a coefficient of thermal expansion (a) having units of ppm/°C, and the adhesive has a shear modulus (G) having units of MPa. In one or more embodiments, the plastic material of the frame and the adhesive are selected such that $G \leq A\alpha^3$, and wherein A has units of (MPa)(ppm/°C)$^{+3}$ and is equal to 500,000.

According to still another aspect, embodiments of the disclosure relate to a vehicle interior component. The vehicle interior component includes a glass sheet having a first major surface and a second major surface. The second major surface is opposite to the first major surface. A glass thickness ($t_g$) is defined between the first major surface and the second major surface. The glass sheet is made of a glass material having a glass elastic modulus ($E_g$) and a glass coefficient of thermal expansion ($\alpha_g$). The vehicle interior component also includes a frame made of a plastic material and has a plastic thickness ($t_p$). The plastic material has a plastic elastic modulus ($E_p$) and a plastic coefficient of thermal expansion ($\alpha_p$). An adhesive bonds the second major surface of the glass sheet to the frame, and the adhesive has a shear modulus (G). The plastic material of the frame, the adhesive, and the glass material of the glass sheet are selected so that

$$10 \ (ppm/°C)^2 MPa \leq \left( \alpha_p - \alpha_g \right)^2 G \left( \frac{E_p t_p}{E_p t_p + E_g t_g} \right) \leq 300 \ (ppm/°C)^2 MPa$$

.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims.

**BRIEF DESCRIPTION OF THE DRAWINGS**

The accompanying drawings are included to provide a further understanding and are incorporated in and constitute a part of this specification. The drawings illustrate one or more embodiment(s), and together with the description serve to explain principles and operation of the various embodiments. In the drawings:

FIG. 1 is a perspective view of a vehicle interior with vehicle interior systems, according to exemplary embodiments;

FIGS. 2A and 2B depict a V-shaped glass article having a plastic frame and a C-shaped glass article having a plastic frame, respectively, according to exemplary embodiments;

FIG. 3 depicts an exploded perspective view of a glass article and process chuck, according to an exemplary embodiment;

FIG. 4 schematically depicts a design space for a plastic frame having equivalent reliability to a reference metal frame, according to an exemplary embodiment;

FIG. 5 depicts an example embodiment of a design space for a plastic frame based on a reference metal frame, according to an exemplary embodiment;

FIG. 6 depicts a plot of adhesive shear modulus and coefficient of thermal expansion for embodiments of a plastic frame mechanically equivalent to a reference metal frame, the plot being fit with a power law curve relating the coefficient of thermal expansion for the plastic frame to the shear modulus of the adhesive layer, according to an exemplary embodiment;

FIG. 7 depicts a graph relating the coefficient of thermal expansion for a plastic frame to the thickness of the plastic frame based on a thickness of an equivalent metal frame, according to an exemplary embodiment;

FIG. 8 depicts a graph relating the coefficient of thermal expansion for a plastic frame to the thickness of the plastic frame based on a stiffness of an equivalent metal frame, according to an exemplary embodiment; and

FIG. 9 depicts geometric dimensions of a glass sheet, according to an exemplary embodiment.

## DETAILED DESCRIPTION

Reference will now be made in detail to various embodiments of a glass article having a plastic frame for a vehicle interior system, examples of which are illustrated in the accompanying drawings. As will be described in greater detail below, the glass articles include a glass sheet adhered to a frame. In order to decrease the material and manufacturing cost of such glass articles, it is desirable to form the frame from plastic materials. However, vehicles, such as automobiles, that incorporate the glass articles are often subject to extreme temperatures as a result of ambient weather conditions and engine operation. As compared to conventionally used metal frames, a plastic frame will generally experience greater dimensional changes as a result of the temperature extremes that could lead to the development of greater internal stresses in the adhesive layer joining the glass sheet to the frame. According to the present disclosure, a design window based on the thermal and mechanical reliability of the glass article having a plastic frame is developed. In particular, embodiments of the present disclosure establish a relationship between the mechanical properties of the adhesive material and the plastic frame that make the glass article as reliable as a comparable glass article having a metal frame. These and other aspects and advantages will be described more fully in relation to the exemplary embodiments provided below and in the drawings. These embodiments are presented by way illustration and not limitation.
In order to provide context for the following discussion, exemplary embodiments of glass articles having a plastic frame will be described in relation to the particular application of a vehicle interior system.

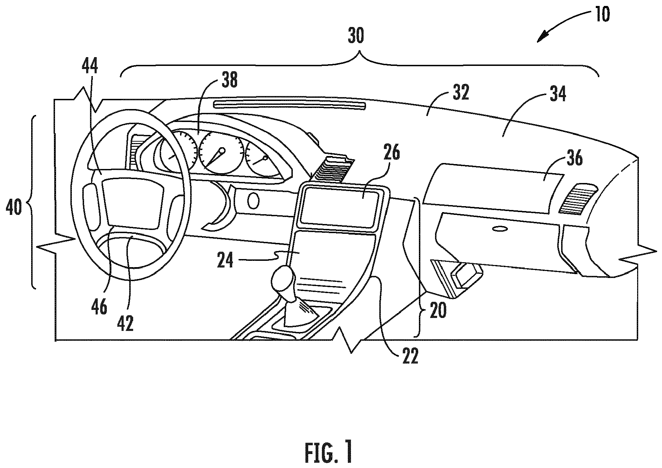

FIG. 1 shows an exemplary interior 10 of a vehicle that includes three different embodiments of vehicle interior systems 20, 30, 40. Vehicle interior system 20 includes a base, shown as center console base 22, with a surface 24 including a display 26. Vehicle interior system 30 includes a base, shown as dashboard base 32, with a surface 34 including a display 36. The dashboard base 32 typically includes an instrument panel 38 which may also include a display. Vehicle interior system 40 includes a base, shown as steering wheel base 42, with a surface 44 and a display 46. In one or more embodiments, the vehicle interior system of any of the embodiments herein includes a base that is an arm rest, a pillar, a seat back, a floorboard, a headrest, a door panel, or any portion of the interior of a vehicle that includes a surface. In embodiments, such surfaces are curved, planar or include both curved and planar portions.
The embodiments of the glass articles described herein can be used in each of vehicle interior systems 20, 30, 40, among others. In some such embodiments, the glass article discussed herein may include a cover glass sheet that also covers non-display surfaces of the dashboard, center console, steering wheel, door panel, etc. In such embodiments, the glass material may be selected based on its weight, aesthetic appearance, etc. and may be provided with a coating (e.g., an ink or pigment coating) including a pattern (e.g., a brushed metal appearance, a wood grain appearance, a leather appearance, a colored appearance, etc.) to visually match the glass components with adjacent non-glass components. In specific embodiments, such ink or pigment coating may have a transparency level that provides for deadfront or color matching functionality when the display 26, 36, 38, 46 is inactive. Further, while the vehicle interior of FIG. 1 depicts a vehicle in the form of an automobile (e.g., cars, trucks, buses and the like), the glass articles disclosed herein can be incorporated into other vehicles, such as trains, sea craft (boats, ships, submarines, and the like), and aircraft (e.g., drones, airplanes, jets, helicopters and the like).

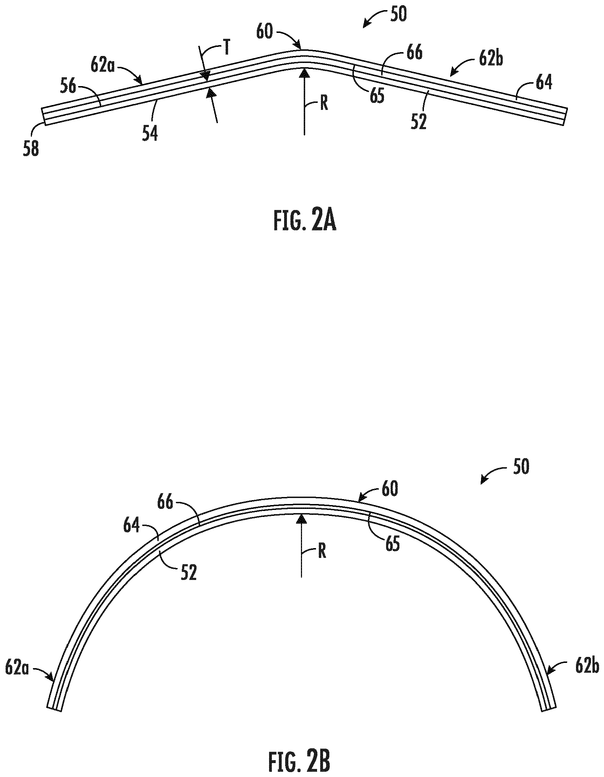

In embodiments, the surfaces 24, 34, 44 can be flat or planar (e.g., having a radius of curvature of 10 m or more), or in embodiments, the surfaces 24, 34, 44 can be any of a variety of curved shapes, such as V-shaped or C-shaped curved glass articles as shown in FIGS. 2A and 2B, respectively. Referring first to FIG. 2A, a side view of an embodiment of a V-shaped glass article 50 is shown. The glass article 50 includes a glass sheet 52 having a first major surface 54, a second major surface 56 opposite to the first major surface 54, and a minor surface 58 joining the first major surface 54 to the second major surface 56. The first major surface 54 and the second major surface 56 define a thickness T of the glass sheet 52. In embodiments, the thickness T of the glass sheet 52 can be in a range from about 0.3 mm to about 2 mm, for example in a range from about 0.5 mm to about 1.1 mm. In a vehicle, the first major surface 54 faces the occupants of the vehicle.

In embodiments, the first major surface 54 and/or the second major surface 56 can include one or more surface treatments. Examples of surface treatments that may be applied to one or both of the first major surface 54 and second major surface 56 include an anti-glare coating, an anti-reflective coating, a coating providing touch functionality, a decorative (e.g., ink or pigment) coating, and/or an easy-to-clean coating.

As can be seen in FIG. 2A, the glass sheet 52 has a curved region 60 disposed between a first flat section 62a and a second flat section 62b. In embodiments, the curved region 60 may have a radius of curvature R in a range from about 50 mm to a radius of curvature that is less than substantially flat or planar (e.g., R ≥ 10 m). Further, as shown in FIG. 2A, the curved region 60 can define a concave curve with respect to the first major surface 54, but in other embodiments, the curved region 60 can instead be a convex curve with respect to the first major surface 54.

In the glass article 50 of FIG. 2A, a frame 64 is adhered to the second major surface 56 of the glass sheet 52 using an adhesive layer 66. In embodiments, the adhesive layer 66 may be a structural adhesive, such as toughened epoxy, flexible epoxy, acrylics, silicones, urethanes, polyurethanes, and silane modified polymers. In embodiments, the adhesive layer 66 can have a thickness in a range from about 0.5 mm to about 3 mm, for example about 1 mm, between the frame 64 and the glass sheet 52.

In part, the frame 64 facilitates mounting the glass article 50 to a vehicle interior base (such as center console base 22, dashboard base 32, and/or steering wheel base 42 as shown in FIG. 1). Additionally, for curved glass articles 50, the frame 64 may have a curved frame support surface 65 that holds the glass sheet 52 in its curved shape (at least in the curved region 60). In embodiments of curved glass articles 50, the glass sheet 52 can be formed in such a way that the curved region 60 is not permanent. That is, the glass sheet 52 would spring back to a planar, non-curved configuration if the glass sheet 52 was not adhered to the frame 64 using the adhesive layer 66. Thus, the glass sheet 52 can be stressed to produce the curvature and remain stressed during the life of the glass article 50. Accordingly, In this way, the desired curvature can be maintained, even at tight bend radiuses, during forming of the curved glass article 50.

FIG. 2B depicts another embodiment of a glass article 50, in particular a C-shaped glass article 50. As compared to the V-shaped glass article 50 of FIG. 2A, the C-shaped glass article 50 of FIG. 2B has a larger curved region 60 and shorter flat sections 62a, 62b. The V-shape and C-shape are but two examples of curved glass articles 50 that can be created according to the present disclosure. In other embodiments, the glass articles 50 can include curved regions 60 having opposing curvatures to create an S-shape, a curved region 60 followed by a flat section 62a to create a J-shape, and curved regions 60 separated by a flat section 62a to create a U-shape, among others.

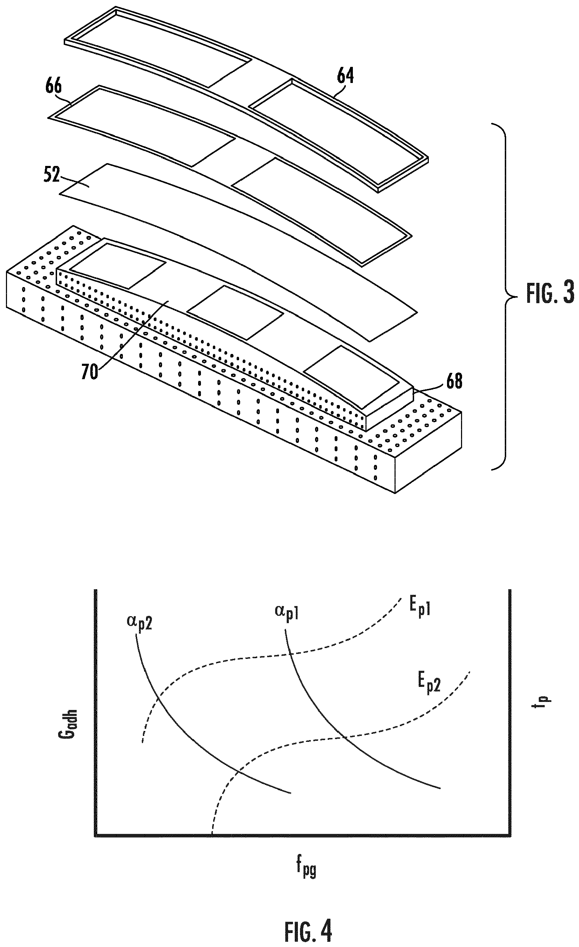

In embodiments in which the glass articles 50 are curved, the glass articles 50 may be formed by cold-forming techniques. In general, the process of cold-forming involves application of a bending force to the glass sheet 52 while the glass sheet 52 is situated on a chuck 68 as shown in the exploded view of FIG. 3. As can be seen, the chuck 68 has a curved forming surface 70, and the glass sheet 52 is bent into conformity with the curved forming surface 70. In embodiments, the curved forming surface 70 has a first radius of curvature, and upon bending the glass sheet 52 into conformity with the curved forming surface 70, the glass sheet 52 will have a second radius of curvature that is within 10%, or 7%, or 5%, or 2% of the first radius of curvature. Further, in embodiments, the curved support surface 65 of the frame 64 has a third radius of curvature that is within 10%, or 7%, or 5%, or 2% of one or both of the first radius of curvature or the second radius of curvature. In embodiments, the first, second, and third radiuses of curvature are 50 mm or greater.

In embodiments, the cold-forming process may also involve attaching a display and/or touch panel to the second major surface 56 of the glass sheet 52. In embodiments, the display can be a light-emitting diode (LED) display, an organic LED (OLED) display, a micro-LED display, a quantum dot LED (QLED) display, a liquid crystal display (LCD), or an electroluminescent display (ELD), among others. In embodiments, the touch panel provides interactive touch functionality. The display panel and/or touch panel may be adhered to the second major surface 56 of the glass sheet 52 using, e.g., an optically clear adhesive. Advantageously, it is easier to apply surface treatments to a flat glass sheet 52 prior to creating the curvature in the glass sheet 52, and cold-forming allows the treated glass sheet 52 to be bent without destroying the surface treatment (as compared to the tendency of high temperatures associated with hot-forming techniques to destroy surface treatments, which requires surface treatments to be applied to the curved article in a more complicated process). In embodiments, the cold-forming process is performed at a temperature less than the softening temperature of the glass sheet 52. In particular, the cold-forming process may be performed at room temperature (e.g., about 20 °C) or a slightly elevated temperature, e.g., at 200 °C or less, 150 °C or less, 100 °C or less, or at 50 °C or less.

According to the present disclosure, the frame 64 of the glass article 50 is made of plastic. In embodiments, "plastic" includes any polymeric material or composition in which a polymeric material is among the largest constituent components, e.g., compositions that may also include any of a variety of typical processing additives, such as colorants, fillers, flame retardants, antioxidants, slip compounds, plasticizers, etc. Further, "plastic" includes composite materials having a fiber reinforced polymeric matrix, including continuous fiber composites as well as short fiber composites. In embodiments, a plastic may be also be defined as a material having both a high coefficient of thermal expansion (e.g., > 40 ppm/°C) in at least one of three axes and a low modulus (e.g., < 10 GPa) in at least one of three axes. Examples of plastics suitable for use as the frame 64 include polycarbonate/acrylonitrilebutadiene-styrene terpolymer blend (PC/ABS) as well as glass fiber and/or carbon fiber reinforced PC/ABS.

Compared to metals, such as alloys of steel, aluminum, and magnesium, the coefficient of thermal expansion (CTE) of plastics is generally higher, meaning that plastic materials will generally experience greater dimensional changes as a result of temperature fluctuations. When subjected to temperatures across the range of, e.g., -20 °F to 120 °F associated with the ambient weather conditions that a vehicle may experience, the higher coefficient of thermal expansion of the plastic will cause the frame 64 to expand or contract more at the temperature extremes than a conventional metal frame. This additional expansion or contraction creates stress in the adhesive layer 66 that could lead to delamination of the glass sheet 52 from the frame 64.

Because of the increased possibility of delamination associated with using a plastic frame, the inventors have determined a design space for glass articles 50 having a plastic frame 64 based on a relationship between the mechanical properties of the adhesive layer 66 and the frame 64.

The thermally induced stresses generated in the adhesive layer 66 result from the strain produced by differences in the thermal coefficient of expansions between the components of the glass article 50. If the stress exceeds the strength of the adhesive layer 66, delamination between the glass sheet 52 and the frame 64 can occur, resulting in failure of the glass article 50. The stress in the adhesive layer 66 can be modeled as a function of the properties of the glass sheet 52, the frame 64, and the adhesive layer 66. Specifically, the maximum shear stress ($\tau_{max}$) in the adhesive layer 66 is given by Equation (1) below:

$$\tau_{max} = \frac{(\alpha_m - \alpha_g) G_{adh} \tanh(\beta L) \Delta T}{\beta t_{adh}} \qquad (1)$$

in which $\alpha_x$ is the coefficient of thermal expansion (with the subscript x being m for metal, p for plastic, g for glass, or 0, 1 for an initial value or a new value, respectively); $G_{adh}$ representing the adhesive shear modulus (Go, Gi, etc. ); $t_{adh}$ representing the adhesive thickness; $\Delta T$ representing a change in temperature (from the temperature at the time of bonding); $L$ representing ½ of the frame length; and $\beta$ being given in equation (2) below as:

$$\beta = \sqrt{\left[\frac{G_{adh}}{t_{adh}}\left(\frac{1}{E_m t_m} + \frac{1}{E_g t_g}\right)\right]} \qquad (2)$$

in which $E_x$ is the Young's modulus, and $t_x$ is the material thickness. The equations above apply for both planar and curved glass articles 50. In particular, bending stresses for curved glass articles 50 are generally minor compared to the thermal stresses from mismatches in coefficients of thermal expansion experienced by both curved and planar glass articles 50, and moreover, the bending stress related to the designed curvature would be the same for equivalent metal and plastic frames because the curvature would be the same.

As mentioned above, metal frames are conventionally used in glass articles, and glass articles having such metal frames have been rigorously tested for reliability in relation to thermal stresses developed in the adhesive layer. Thus, the design space for plastic frames 64 developed by the inventors is derived from finding combinations of adhesive layer 66 and plastic frame 64 based on material properties of each that result in an equivalent adhesive stress that would be experienced by a conventional glass article having a metal frame. For $\tau_0$ corresponding to the maximum shear stress for a glass article having a metal frame and $\tau_1$ corresponding to the maximum shear stress for a glass article 50 having a plastic frame 64 according to the present disclosure, then equivalence in maximum shear stress between the designs is given by

$$\tau_0 = \tau_1 \qquad\qquad (3)$$

In view of the desire to replace conventional metal frames with plastic frames 64, the dimensions of the frame will remain the same such that length L will be the same and $\tanh(\beta L)$ is approximately the same and approaches 1. Further, the adhesive thickness $t_{adh}$ and temperature difference $\Delta T$ are the same for both the glass article having the metal frame and the glass article 50 having the plastic frame 64. In addition, the same glass sheet (same thickness and modulus) would be used for each glass article. Using Equations 1, 2, and 3, the following relationship (Equation 4) between the glass article having a metal frame and the glass article 50 having a plastic frame 64 is developed:

$$\left(\alpha_m - \alpha_g\right)^2 G_0 f_{mg} = \left(\alpha_p - \alpha_g\right)^2 G_1 f_{pg} = Constant \qquad\qquad (4)$$

in which the constant is based on the glass article having the metal frame as a basis for comparison:

$$\left(\alpha_m - \alpha_g\right)^2 G_0 f_{mg} = Constant \qquad\qquad (5)$$

Equations 4 and 5 utilize a fractional term $f$ that considers the Young's modulus and the thickness of the frame and the Young's modulus and thickness of the glass, and the fractional term $f$ can be derived from Equations 1-3. The fractional term $f_{pg}$ related to a glass article 50 with a plastic frame 64 is:

$$f_{pg} = \frac{\left(E_p t_p\right)}{\left(E_p t_p + E_g t_g\right)} \qquad\qquad (6)$$

In the fractional term $f_{mg}$ for a glass article with a metal frame, the Young's modulus and thickness of the metal replace the Young's modulus and thickness of the plastic. The fractional terms $f_{pg}$ and $f_{mg}$ are limited to the range between 0 and 1, in particular between 0.05 and 0.95. This limitation allows the generation of a design space based on the CTE, Young's modulus, and thickness of the plastic frame 64, along with a range of adhesive shear modulus values ($G_{adh}$). Using these four variables, FIG. 4 depicts a design space in which the adhesive shear stress for a glass article 50 having a plastic frame 64 is equivalent to a given glass article having a metal frame. That is FIG. 4 depicts a design space according to Equation 7 below:

$$\left(\alpha_p - \alpha_g\right)^2 G_1 f_{pg} = Constant \qquad\qquad (7)$$

The depiction in FIG. 4 is a schematic representation based on manipulation of the plastic CTE or the Young's modulus of the plastic. The curves labeled $\alpha_{p1}$ and $\alpha_{p2}$ represent boundary conditions for the CTE of the plastic material of the frame 64. For example, the boundary conditions for the plastic material can be in a range from about 5 ppm/°C to about 100 ppm/°C. As the fractional term $f_{pg}$ is varied from 0 to 1, the shear modulus $G_1$ of the adhesive layer 66 will change based on Equation 7. Similarly, the curves labeled $E_{p1}$ and $E_{p2}$ represent boundary conditions for the Young's modulus of the plastic material of the frame 64. For example, the boundary conditions for the plastic material can be in a range from about 4 GPa to about 40 GPa. From Equation 6, the fractional term $f_{pg}$ is determined based on the Young's modulus of the plastic material and the thickness $t_p$ of the frame 64, and thus, as the fractional term $f_{pg}$ goes from 0 to 1 for the boundary conditions of the Young's modulus, the frame thickness $t_p$ will change based on Equation 6. The region bounded by the four curves $\alpha_{p1}$, $\alpha_{p2}$, $E_{p1}$, and $E_{p2}$ represents designs for a glass article 50 having a plastic frame 64 that will be equivalent in terms of maximum shear stress to a glass article having a metal frame used as a reference to define the Constant. In embodiments, the Constant is in the range from about 10 (ppm/°C)$^2$MPa to about 300 (ppm/°C)$^2$MPa, for example in a range from about 13.6 (ppm/°C)$^2$MPa to about 257 (ppm/°C)$^2$MPa, based on equivalent metal frames of various alloys, e.g., steel alloy, aluminum alloy, magnesium alloy, etc.

In a particular example, the Constant used to define the design space was based on an example glass article having a metal (Al alloy) frame with the properties shown in Table 1.

Table 1. Material Properties of Reference Glass Article with Metal Frame

| Material | CTE (ppm/°C) | Young's Modulus (MPa) | Thickness (mm) |
|---|---|---|---|
| Glass | 7.88 | 76,600 | 0.7 |
| Adhesive | 100 | 1.07 | 1.0 |
| Metal (Al alloy) | 23.8 | 70,300 | 4.0 |

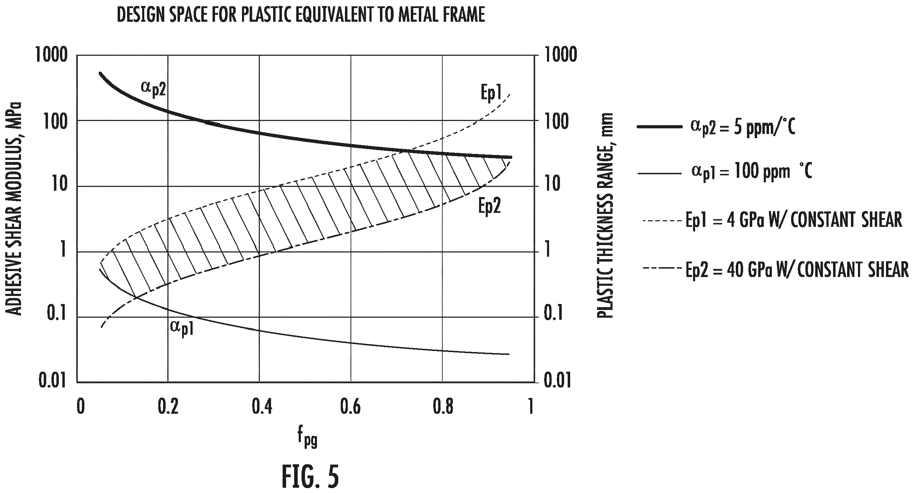

Using the boundary conditions described above ($\alpha_p$ = 5 - 100 ppm/°C and $E_p$ = 4 - 40 GPa) and the Constant based on the reference frame materials from Table 1, a design space was developed in FIG. 5, wherein the shear modulus ($G_{adh}$) of the adhesive layer 66 and the thickness ($t_p$) of the plastic frame 64 are plotted against the material fractional term $f_{pg}$. The space contained within the solid and dashed lines, indicated by the black hatches, is the space where the solution to Equation 7 is simultaneously valid for all four variables and meets the condition of equivalent adhesive shear stress. For example, if the plastic has an intermediate CTE, such as $\alpha_p$ = 50 ppm/°C, and the plastic is also not too stiff with $E_p$ = 4 GPa, then the resultant plastic thickness $t_p$ for equivalent stress would be about 2 mm and an adhesive shear modulus $G_{adh}$ would be about 2 MPa. As the CTE of the plastic gets smaller for a given Young's modulus, the adhesive would need to have a higher shear modulus $G_{adh}$ and/or the frame thickness $t_p$ would need to increase.

A second method for determining the plastic frame 64 properties for equivalent stress is by using a Monte Carlo simulation. The procedure utilizes randomly selected values of $\alpha_p$ and $f_{pg}$ each distributed in a uniform distribution (that is, equal probability across the selected ranges). The ranges chosen for this example are $\alpha_p$ = 5 ppm/°C to 80 ppm/°C, and $f_{pg}$ = 0.1 to 0.9. Equation (7) is rewritten as:

$$G_1 = \frac{Constant}{\left(\alpha_p - \alpha_g\right)^2 f_{pg}} \tag{8}$$

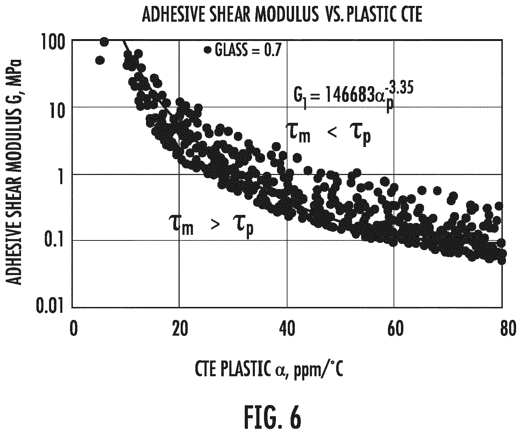

Using the results of the Monte Carlo simulation, a plot of $G_1$ against $\alpha_p$ was developed and is shown in FIG. 6. A power law curve was fit to the data so that $G_1$ was a function of $\alpha_p$, and the equation is provided below as Equation 9.

$$G_1 = A\alpha_p^b \tag{9}$$

The coefficient A and exponent b are specific to a particular equivalent metal frame design. For the equivalent metal frame glass article having the properties of Table 1, the power law equation was $G_1 = 146,683\alpha_p^{-3.35}$ for the curve shown in FIG. 6. As can be seen from FIG. 6, the data points satisfying Equation 8 bound the curve defined by the power law curve. In embodiments, the exponent b is from -3.5 to -3.0. Further, in embodiments, the coefficient A is from 100,000 to 500,000. In one or more embodiments, coefficient A has units of $(MPa)(ppm/°C)^{+3}$. Notwithstanding, regions below the curve can produce a mechanically reliable frame because in those regions $\tau_m > \tau_p$, i.e., the maximum stress for the plastic frame will be less than the maximum stress in the equivalent metal frame. In particular embodiments, the shear modulus $G_1$ and coefficient of thermal expansion $\alpha_p$ are selected such that $G_1 \le 500,000a_p^{-3}$, or $G_1 \le 150,000a_p^{-3}$, or $G_1 \le 500,000\alpha_p^{-3.35}$, or $G_1 \le 146,683\alpha_p^{-3.35}$. In embodiments, the shear modulus $G_1$ and coefficient of thermal expansion $\alpha_p$ are selected such that $G_1 \ge 100,000a_p^{-3.5}$. In one or more embodiments, the plastic material of the frame and the adhesive are selected such that $G \le A\alpha^{-3}$, and wherein A has units of $(MPa)(ppm/°C)^{+3}$ and is in a range from about 100,000 to about 500,000 (e.g., from 150,000 to 500,000, from 200,000 to 500,000, from 250,000 to 500,000, from 300,000 to 500,000, from 350,000 to 500,000, from 400,000 to 500,000, from 100,000 to 450,000, from 100,000 to 400,000, from 100,000 to 350,000, from 100,000 to 300,000, from 100,000 to 250,000, from 100,000 to 200,000). In one or more embodiments, the plastic material of the frame and the adhesive are selected such that $G \le 500,000\alpha^{-3}$

An equation (Equation 10) can be written for the plastic frame thickness, $t_p$, in terms of only two variables, $E_p$ and $\alpha_p$:

$$t_p = \frac{E_g t_g}{E_p}\left[\left(\frac{Constant}{\left(\alpha_p - \alpha_g\right)A\alpha_p^b}\right)^{-1} - 1\right]^{-1} \tag{10}$$

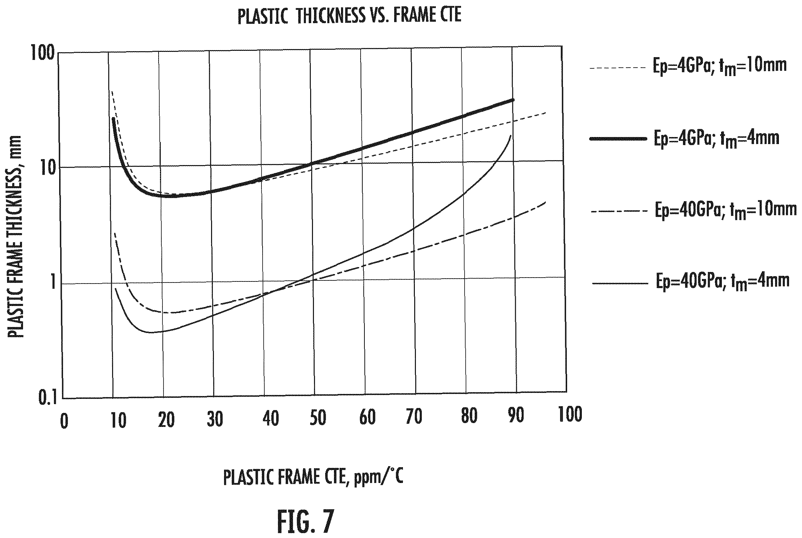

FIG. 7 shows a plot of the thickness ($t_p$) against CTE ($\alpha_p$) for the plastic frame 64. The equivalent design space lies within the area defined by the upper and lower curves. The upper curves considered a plastic material having a Young's modulus of 4 GPa and an equivalent metal frame thickness of 10 mm and 4 mm. The lower curves considered a plastic material having a Young's modulus of 40 GPa and an equivalent metal frame thickness of 10 mm and 4 mm. Using the Young's modulus of the metal from Table 1 and the abovereferenced equivalent frame thicknesses, the Constant for Equation 10 can be determined, and using Equation 10, the plastic frame thickness ($t_p$) can be found. FIG. 7 demonstrates that a thicker plastic frame is needed for a higher CTE (e.g., 40 ppm/°C and higher), and a thicker plastic frame is needed at a lower Young's modulus. In embodiments, the frame 64 has a thickness ($t_p$) that is in a range of about 1 mm to about 15 mm, for example in a range from about 2 mm to about 10 mm.

Further, the plastic frame 64 can be compared to the equivalent metal frame in terms of stiffness as demonstrated by Equation 11, below:

$$K = C\frac{E_m w t_m^3}{L^3} = C\frac{E_p w t_p^3}{L^3} \tag{11}$$

In Equation 11, K is the stiffness and C is a geometric constant. Assuming the width ($w$) and length (L) are the same for both the equivalent metal frame and the plastic frame 64, the plastic thickness can be determined according to Equation 12:

$$t_p = t_m \left(\frac{E_m}{E_p}\right)^{\frac{1}{3}} \tag{12}$$

Combining Equations 10 and 12 provides the follow Equation for the thickness of the plastic frame:

$$t_p = \left(\frac{E_m t_m^3}{E_g t_g}\left[\left(\frac{Constant}{(\alpha_p - \alpha_g)^2 A \alpha_p^b}\right)^{-1} - 1\right]\right)^{\frac{1}{2}} \tag{13}$$

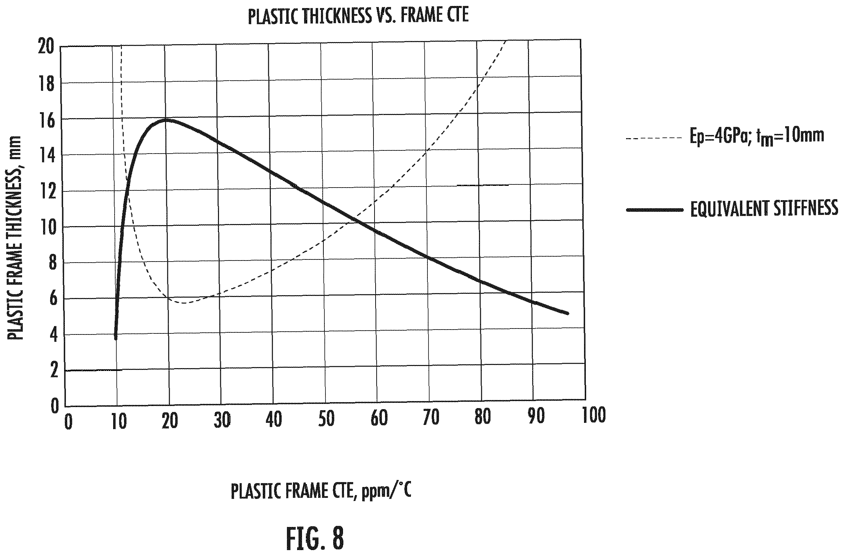

FIG. 8 depicts a graph showing a curve of equivalent stiffness according to Equations 10 and 13. The curve according to Equation 10 is the dashed line and is the same as the upper boundary, dashed curve shown in FIG. 7 (the graph in FIG. 7 uses a logarithmic scale whereas the graph of FIG. 8 does not). The curve according to Equation 13 is the solid line of FIG. 8. As can be seen in FIG. 8, the dashed and solid lines intersect at two points. At these two points, the shear stress in the adhesive and the frame stiffness are equivalent for the plastic frame 64 and the reference metal frame. For the embodiment represented in the graph of FIG. 8, the two positions are at a CTE of about 55 ppm/°C and about 12 ppm/°C. These points correspond to adhesive shear modulus $G_1$ = 0.2 MPa and 33 MPa, respectively, with plastic frame thicknesses of 10 and 12 mm respectively.

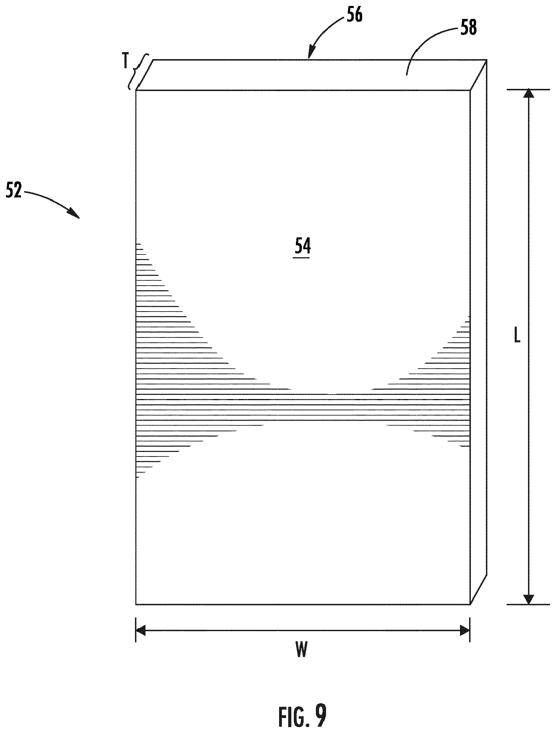

Having described various relationships by which the properties of the plastic frame 64 and adhesive layer 66 can be determined, the properties and composition of the glass sheet 52 will be described in greater detail. Referring to FIG. 9, additional structural details of glass sheet 52 of the glass article 50 are shown and described. As noted above, glass sheet 52 has a thickness T that is substantially constant and is defined as a distance between the first major surface 54 and the second major surface 56 along a normal to one or both major surfaces. In various embodiments, T may refer to an average thickness or a maximum thickness of the glass sheet. In addition, glass sheet 52 includes a width W defined as a first maximum dimension of one of the first or second major surfaces 54, 56 orthogonal to the thickness T, and a length L defined as a second maximum dimension of one of the first or second major surfaces 54, 56 orthogonal to both the thickness and the width. In other embodiments, W and L may be the average width and the average length of glass sheet 52, respectively.

In various embodiments, average or maximum thickness T can be in a range from about 0.3 mm to about 2 mm. In various embodiments, width W can be in a range from about 5 cm to about 250 cm, and length L can be in a range from about 5 cm to about 1500 cm. As mentioned above, the radius of curvature (e.g., R as shown in FIGS. 2A and 2B) of glass sheet 52 can be about 50 mm or greater.

In embodiments, the glass sheet 52 may be strengthened. In one or more embodiments, glass sheet 52 may be strengthened to include compressive stress that extends from a surface to a depth of compression (DOC). The compressive stress regions are balanced by a central portion exhibiting a tensile stress. At the DOC, the stress crosses from a positive (compressive) stress to a negative (tensile) stress.

In various embodiments, glass sheet 52 may be strengthened mechanically by utilizing a mismatch of the coefficient of thermal expansion between portions of the article to create a compressive stress region and a central region exhibiting a tensile stress. In some embodiments, the glass sheet may be strengthened thermally by heating the glass to a temperature above the glass transition point and then rapidly quenching.

In various embodiments, glass sheet 52 may be chemically strengthened by ion exchange. In the ion exchange process, ions at or near the surface of the glass sheet are replaced by - or exchanged with - larger ions having the same valence or oxidation state. In those embodiments in which the glass sheet comprises an alkali aluminosilicate glass, ions in the surface layer of the article and the larger ions are monovalent alkali metal cations, such as $Li^+$, $Na^+$, $K^+$, $Rb^+$, and $Cs^+$. Alternatively, monovalent cations in the surface layer may be replaced with monovalent cations other than alkali metal cations, such as $Ag^+$ or the like. In such embodiments, the monovalent ions (or cations) exchanged into the glass sheet generate a stress.

Ion exchange processes are typically carried out by immersing a glass sheet in a molten salt bath (or two or more molten salt baths) containing the larger ions to be exchanged with the smaller ions in the glass sheet. It should be noted that aqueous salt baths may also be utilized. In addition, the composition of the bath(s) may include more than one type of larger ions (e.g., Na+ and K+) or a single larger ion. It will be appreciated by those skilled in the art that parameters for the ion exchange process, including, but not limited to, bath composition and temperature, immersion time, the number of immersions of the glass sheet in a salt bath (or baths), use of multiple salt baths, additional steps such as annealing, washing, and the like, are generally determined by the composition of the glass sheet (including the structure of the article and any crystalline phases present) and the desired depth of compression (DOC) and compressive stress (CS) of the glass sheet that results from strengthening. As used herein CS may be the "maximum compressive stress" which is the highest compressive stress value measured within the compressive stress layer. In some embodiments, the maximum compressive stress is located at the surface of the glass sheet. In other embodiments, the maximum compressive stress may occur at a depth below the surface, giving the compressive profile the appearance of a "buried peak."

Exemplary molten bath compositions may include nitrates, sulfates, and chlorides of the larger alkali metal ion. Typical nitrates include $KNO_3$, $NaNO_3$, $LiNO_3$, $NaSO_4$ and combinations thereof. The temperature of the molten salt bath typically is in a range from about 380°C up to about 450°C, while immersion times range from about 15 minutes up to about 100 hours depending on glass sheet thickness, bath temperature and glass (or monovalent ion) diffusivity. However, temperatures and immersion times different from those described above may also be used.

In one or more embodiments, the glass sheet 52 may be immersed in a molten salt bath of 100% $NaNO_3$, 100% $KNO_3$, or a combination of $NaNO_3$ and $KNO_3$ having a temperature from about 370 °C to about 480 °C. In some embodiments, the glass sheet may be immersed in a molten mixed salt bath including from about 5% to about 90% $KNO_3$ and from about 10% to about 95% $NaNO_3$. In one or more embodiments, the glass sheet may be immersed in a second bath, after immersion in a first bath. The first and second baths may have different compositions and/or temperatures from one another. The immersion times in the first and second baths may vary. For example, immersion in the first bath may be longer than the immersion in the second bath.

In one or more embodiments, the glass sheet may be immersed in a molten, mixed salt bath including $NaNO_3$ and $KNO_3$ (e.g., 49%/51%, 50%/50%, 51%/49%) having a temperature less than about 420 °C (e.g., about 400 °C or about 380 °C). for less than about 5 hours, or even about 4 hours or less.

Ion exchange conditions can be tailored to provide a "spike" or to increase the slope of the stress profile at or near the surface of the resulting glass sheet. The spike may result in a greater surface CS value. This spike can be achieved by a single bath or multiple baths, with the bath(s) having a single composition or mixed composition, due to the unique properties of the glass compositions used in the glass sheets described herein.

In one or more embodiments, where more than one monovalent ion is exchanged into the glass sheet, the different monovalent ions may exchange to different depths within the glass sheet (and generate different magnitudes stresses within the glass sheet at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method.

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass sheet is chemically strengthened by an ion exchange treatment, FSM or SCALP may be used depending on which ion is exchanged into the glass sheet. Where the stress in the glass sheet is generated by exchanging potassium ions into the glass sheet, FSM is used to measure DOC. Where the stress is generated by exchanging sodium ions into the glass sheet, SCALP is used to measure DOC. Where the stress in the glass sheet is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass sheets is measured by FSM. Central tension or CT is the maximum tensile stress and is measured by SCALP.

In one or more embodiments, the glass sheet may be strengthened to exhibit a DOC that is described as a fraction of the thickness T of the glass sheet (as described herein). For example, in one or more embodiments, the DOC may be in the range of about 0.05T to about 0.25T. In some instances, the DOC may be in the range of about 20 $\mu$m to about 300 $\mu$m. In one or more embodiments, the strengthened glass sheet 52 may have a CS (which may be found at the surface or a depth within the glass sheet) of about 200 MPa or greater, about 500 MPa or greater, or about 1050 MPa or greater. In one or more embodiments, the strengthened glass sheet may have a maximum CT in the range of about 20 MPa to about 100 MPa.

Suitable glass compositions for use as glass sheet 52 include soda lime glass, aluminosilicate glass, borosilicate glass, boroaluminosilicate glass, alkali-containing aluminosilicate glass, alkali-containing borosilicate glass, and alkali-containing boroaluminosilicate glass.

Unless otherwise specified, the glass compositions disclosed herein are described in mole percent (mol%) as analyzed on an oxide basis.

In one or more embodiments, the glass composition may include $SiO_2$ in an amount in a range from about 66 mol% to about 80 mol%. In one or more embodiments, the glass composition includes $Al_2O_3$ in an amount in a range from about 3 mol% to about 15 mol%. In one or more embodiments, the glass article may be an aluminosilicate glass article or include an aluminosilicate glass composition. In such embodiments, the glass composition or article formed therefrom includes $SiO_2$ and $Al_2O_3$ and is not a soda lime silicate glass.

In one or more embodiments, the glass composition can comprise $B_2O_3$ in an amount in the range from about 0.01 mol% to about 5 mol%. However, in one or more embodiments, the glass composition is substantially free of $B_2O_3$. As used herein, the phrase "substantially free" with respect to the components of the composition means that the component is not actively or intentionally added to the composition during initial batching but may be present as an impurity in an amount less than about 0.001 mol%.

In one or more embodiments, the glass composition may optionally comprise $P_2O_5$ in an amount from about 0.01 mol% to about 2 mol%. In one or more embodiments, the glass composition is substantially free of $P_2O_5$.

In one or more embodiments, the glass composition may include a total amount of $R_2O$ (which is the total amount of alkali metal oxide such as $Li_2O$, $Na_2O$, $K_2O$, $Rb_2O$, and $CS_2O$) that is in a range from about 8 mol% to about 20 mol%. In one or more embodiments, the glass composition may be substantially free of $Rb_2O$, $Cs_2O$ or both $Rb_2O$ and $Cs_2O$. In one or more embodiments, the $R_2O$ may include the total amount of $Li_2O$, $Na_2O$ and $K_2O$ only. In one or more embodiments, the glass composition may comprise at least one alkali metal oxide selected from $Li_2O$, $Na_2O$ and $K_2O$, wherein the alkali metal oxide is present in an amount greater than about 8 mol% or greater.

In one or more embodiments, the glass composition may comprise $Na_2O$ in an amount in a range from about from about 8 mol% to about 20 mol%. In one or more embodiments, the glass composition may include $K_2O$ in an amount in a range from about 0 mol% to about 4 mol%. In one or more embodiments, the glass composition may be substantially free of $K_2O$. In one or more embodiments, the glass composition is substantially free of $Li_2O$. In one or more embodiments, the amount of $Na_2O$ in the composition may be greater than the amount of $Li_2O$. In some instances, the amount of $Na_2O$ may be greater than the combined amount of $Li_2O$ and $K_2O$. In one or more alternative embodiments, the amount of $Li_2O$ in the composition may be greater than the amount of $Na_2O$ or the combined amount of $Na_2O$ and $K_2O$.

In one or more embodiments, the glass composition may include a total amount of RO (which is the total amount of alkaline earth metal oxide such as CaO, MgO, BaO, ZnO and SrO) in a range from about 0 mol% to about 2 mol%. In one or more embodiments, the glass composition may include CaO in an amount less than about 1 mol%. In one or more embodiments, the glass composition is substantially free of CaO. In some embodiments, the glass composition may comprise MgO in an amount from about 0 mol% to about 7 mol%.

In one or more embodiments, the glass composition may comprise $ZrO_2$ in an amount equal to or less than about 0.2 mol%. In one or more embodiments, the glass composition may comprise $SnO_2$ in an amount equal to or less than about 0.2 mol%.

In one or more embodiments, the glass composition may include an oxide that imparts a color or tint to the glass articles. In some embodiments, the glass composition may include an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

In one or more embodiments, the glass composition may include Fe, expressed as $Fe_2O_3$, wherein Fe is present in an amount up to about 1 mol%. Where the glass composition includes $TiO_2$, $TiO_2$ may be present in an amount of about 5 mol% or less.

An exemplary glass composition includes $SiO_2$ in an amount in a range from about 65 mol% to about 75 mol%, $Al_2O_3$ in an amount in a range from about 8 mol% to about 14 mol%, $Na_2O$ in an amount in a range from about 12 mol% to about 17 mol%, $K_2O$ in an amount in a range of about 0 mol% to about 0.2 mol%, and MgO in an amount in a range from about 1.5 mol% to about 6 mol%. Optionally, $SnO_2$ may be included in the amounts otherwise disclosed herein. It should be understood, that while the preceding glass compositions express approximate ranges, in other embodiments, glass sheet 52 may be made from any glass composition falling with any one of the exact numerical ranges discussed above.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element and is not intended to be construed as meaning only one.

It will be apparent to those skilled in the art that various modifications and variations can be made without departing from the spirit or scope of the disclosed embodiments. Since modifications, combinations, sub-combinations and variations of the disclosed embodiments incorporating the spirit and substance of the embodiments may occur to persons skilled in the art, the disclosed embodiments should be construed to include everything within the scope of the appended claims and their equivalents.

**Claims**

1.  A glass article, comprising:

    a glass sheet comprising a first major surface and a second major surface, the second major surface being opposite to the first major surface;
    a frame comprising a plastic material, the plastic material comprising a coefficient of thermal expansion (a) having units of ppm/°C;
    an adhesive bonding the second major surface of the glass sheet to the frame, the adhesive comprising a shear modulus (G) having units of MPa; and
    wherein the plastic material of the frame and the adhesive are selected such that $G \leq A\alpha^{-3}$, and wherein A has units of $(MPa)(ppm/°C)^{+3}$ and is equal to 500,000.

2.  The glass article of claim 1, wherein the shear modulus (G) of the adhesive is in a range from about 0.1 MPa to about 100 MPa.

3.  The glass article of claim 1 or claim 2, wherein the coefficient of thermal expansion (a) of the plastic material is in a range from about 5 ppm/°C to about 100 ppm/°C.

4.  The glass article of any of claims 1-3, wherein the glass sheet comprises a glass material comprising a glass elastic modulus ($E_g$) and a glass thickness ($t_g$) between the first major surface and the second major surface, wherein the plastic material comprises a plastic elastic modulus (Ep) and a frame thickness ($t_p$), and wherein $\dfrac{E_p t_p}{E_p t_p + E_g t_g}$ is greater than 0 and at most 1.

5.  The glass article of claim 4, wherein the plastic elastic modulus ($E_p$) is in a range from about 4 GPa to about 40 GPa.

6.  The glass article of any one of claims 4 or 5, wherein the frame thickness ($t_p$) is in a range from about 1 mm to about 15 mm.

7.  The glass article of claim 6, wherein the frame thickness ($t_p$) is given by

$$t_p = \frac{E_g t_g}{E_p}\left[\left(\frac{Constant}{(\alpha-\alpha_g)A\alpha^b}\right)^{-1} - 1\right]^{-1}$$

, in which $\alpha_g$ is a coefficient of thermal expansion of the glass sheet and the Constant is from 10 to 300 $(ppm/°C)^2 MPa$.

8. The glass article of any of claims 1-7, wherein the frame comprises a curved support surface defining a first curvature having a first radius of curvature and wherein the adhesive bonds the second major surface of the glass sheet to the curved support surface so that the glass sheet defines a second curvature having a second radius of curvature that is within 10% of the first radius of curvature.

9. The glass article of claim 8, wherein the first radius of curvature is 50 mm or greater.

10. The glass article of any of claims 1-9, wherein the glass sheet comprises an average thickness between the first major surface and the second major surface of from 0.3 to 2.0 mm.

11. The glass article of any of claims 1-10, wherein the glass sheet comprises a surface treatment on the first major surface, the second major surface, or both the first major surface and the second major surface, wherein the surface treatment is an easy-to-clean coating, an anti-reflective coating, an anti-glare coating, a decorative coating, or a coating providing touch functionality.

12. The glass article of any of claims 1-11, further comprising a display panel, a touch panel, or both a display panel and a touch panel disposed on the second major surface of the glass sheet.

13. The glass article of any of claims 1-12, wherein:

a glass comprises a glass thickness ($t_g$) being defined between the first major surface and the second major surface, a glass elastic modulus ($E_g$) and a glass coefficient of thermal expansion ($\alpha_g$);
the frame comprises a plastic thickness ($t_p$),
the plastic material comprising a plastic elastic modulus ($E_p$) and a plastic coefficient of thermal expansion ($\alpha_p$), and
the plastic material of the frame, the adhesive, and the glass material of the glass sheet are selected so that

$$10 \ (ppm/°C)^2 MPa \leq \left(\alpha_p - \alpha_g\right)^2 G\left(\frac{E_p t_p}{E_p t_p + E_g t_g}\right) \leq 300 \ (ppm/°C)^2 MPa$$

14. The glass article of any one of claims 1 - 13, wherein the glass elastic modulus ($E_g$) is in a range from about 50 GPa to about 100 GPa.

15. The glass article of any one of claims 1 - 14, wherein:

the plastic thickness ($t_p$) is in a range from about 1 mm to about 15 mm, and
the glass thickness ($t_g$) is in a range from about 0.3 mm to about 2 mm.

FIG. 1

FIG. 2A

FIG. 2B

FIG. 3

FIG. 4

DESIGN SPACE FOR PLASTIC EQUIVALENT TO METAL FRAME

Legend:
- $\alpha_{p2} = 5$ ppm/°C
- $\alpha_{p1} = 100$ ppm °C
- $Ep1 = 4$ GPa W/ CONSTANT SHEAR
- $Ep2 = 40$ GPa W/ CONSTANT SHEAR

FIG. 5

ADHESIVE SHEAR MODULUS VS. PLASTIC CTE

$G_1 = 146683\alpha_p^{-3.35}$

$\tau_m < \tau_p$

$\tau_m > \tau_p$

$\bullet$ GLASS = 0.7

CTE PLASTIC $\alpha$, ppm/°C

FIG. 6

PLASTIC THICKNESS VS. FRAME CTE

Ep=4GPa; $t_m$=10mm

Ep=4GPa; $t_m$=4mm

Ep=40GPa; $t_m$=10mm

Ep=40GPa; $t_m$=4mm

PLASTIC FRAME THICKNESS, mm

PLASTIC FRAME CTE, ppm/°C

FIG. 7

PLASTIC THICKNESS VS. FRAME CTE

PLASTIC FRAME THICKNESS, mm

PLASTIC FRAME CTE, ppm/°C

---- $E_p=4GPa; t_m=10mm$

—— EQUIVALENT STIFFNESS

FIG. 8

FIG. 9

Europäisches
Patentamt

European
Patent Office

Office européen
des brevets

## EUROPEAN SEARCH REPORT

Application Number

EP 22 16 5382

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/258750 A1 (KANG KIAT CHYAI [US] ET AL) 17 September 2015 (2015-09-17) <br> * figures 1-8 * <br> * claims 1-11 * <br> ----- | 1-15 | INV. <br> B32B7/12 <br> B32B17/04 <br> B32B17/10 |
| A | WO 2020/112435 A1 (CORNING INC [US]) 4 June 2020 (2020-06-04) <br> * figures 2-4 * <br> * claims 1-87 * <br> ----- | 1-15 | |

TECHNICAL FIELDS
SEARCHED      (IPC)

B32B

The present search report has been drawn up for all claims

| Place of search | Date of completion of the search | Examiner |
|---|---|---|
| The Hague | 17 August 2022 | Yu, Qianqian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 5382

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2022

| Patent document cited in search report | | Publication date | Patent family member(s) | | Publication date |
|---|---|---|---|---|---|
| US 2015258750 | A1 | 17-09-2015 | CN | 105358320 A | 24-02-2016 |
| | | | EP | 2890560 A1 | 08-07-2015 |
| | | | JP | 6254164 B2 | 27-12-2017 |
| | | | JP | 2015533685 A | 26-11-2015 |
| | | | KR | 20150052129 A | 13-05-2015 |
| | | | TW | 201412522 A | 01-04-2014 |
| | | | US | 2015258750 A1 | 17-09-2015 |
| | | | US | 2021170722 A1 | 10-06-2021 |
| | | | WO | 2014035942 A1 | 06-03-2014 |
| WO 2020112435 | A1 | 04-06-2020 | CN | 113226857 A | 06-08-2021 |
| | | | CN | 213501782 U | 22-06-2021 |
| | | | EP | 3887206 A1 | 06-10-2021 |
| | | | JP | 2022509987 A | 25-01-2022 |
| | | | KR | 20210097747 A | 09-08-2021 |
| | | | TW | 202027975 A | 01-08-2020 |
| | | | US | 2022024179 A1 | 27-01-2022 |
| | | | WO | 2020112435 A1 | 04-06-2020 |

EPO FORM P0459

For more details about this annex : see Official Journal of the European Patent Office, No. 12/82